# EUROPEAN PATENT APPLICATION

(11) **EP 4 848 452 A1**
(43) Date of publication of application: **02.12.2026**
(21) Application number: 24919910.0
(22) Date of filing: 04.12.2024
(51) Int. Cl.: H01M 50/417, H01M 50/489, H01M 50/403

(54) **HIGH-STRENGTH HIGH-ELONGATION SEPARATOR AND PREPARATION METHOD THEREFOR**

(30) Priority: 22.01.2024 CN 202410085973
(71) Applicant: Hebei Gellec New Energy Science & Technology Co., Ltd, Handan, Hebei 057150 (CN)
(72) Inventor: YUAN, Haichao, Handan, Hebei 057150 (CN); XU, Feng, Handan, Hebei 057150 (CN); CHANG, Hongxiang, Handan, Hebei 057150 (CN); MA, Wenxian, Handan, Hebei 057150 (CN); YANG, Huan, Handan, Hebei 057150 (CN); GUO, Zhanxing, Handan, Hebei 057150 (CN); HOU, Dandan, Handan, Hebei 057150 (CN); MA, Cong, Handan, Hebei 057150 (CN); WANG, Ruixin, Handan, Hebei 057150 (CN); HAN, Xiaowei, Handan, Hebei 057150 (CN); ZHAO, Zhuangzhuang, Handan, Hebei 057150 (CN); FENG, Xiaocong, Handan, Hebei 057150 (CN)
(74) Representative: Maiwald GmbH
(86) International application number: PCT/CN2024/136714
(87) International publication number: WO 2025/156832

(57) **Abstract**

Disclosed are a high-strength high-elongation separator and a preparation method therefor. The high-strength high-elongation separator comprises ultra-high molecular weight polyolefin and a solubilizer, wherein the solubilizer is one of or a mixture of more of an ethylene-propylene copolymer, an ethylene-butylene copolymer and an ethylene-octene copolymer. The preparation method therefor comprises: mixing ultra-high molecular weight polyolefin, a solubilizer and a pore-forming agent, and stirring same until uniform, so as to obtain a premixed raw material; injecting the premixed raw material into an extruder, heating same to obtain a thermodynamic single-phase melt, and subjecting the thermodynamic single-phase melt to melt casting onto a cooling roller, so as to obtain a crystallized cast sheet; and subjecting the crystallized cast sheet to primary stretching and cooling to obtain a primary stretched film, subjecting the primary stretched film to secondary stretching to obtain a secondary stretched film, performing extraction and washing, and then drying same, so as to obtain a high-strength high-elongation separator. The preparation method utilizes the solubilizing effect of a copolymer and multiple operations of stretching performed in steps, and therefore the separator has good ductility and tensile strength.

## Description

### TECHNICAL FIELD

The present disclosure belongs to the technical field of battery separators, and specifically relates to a high-strength and high-elongation separator, and a preparation method therefor.

### BACKGROUND

A lithium-ion battery separator is a critical safety and functional component for a lithium battery. A lithium-ion battery separator has the dual functions of electronic insulation and ionic conductivity. Insulation means that when the separator is sandwiched between the positive and negative electrodes, it can prevent short-circuit failure between them. Therefore, the separator needs to have high strength to avoid being punctured by impurities or electrode burrs, which could lead to battery short circuits. A separator also needs to have specified elongation, providing sufficient deformation space when the electrode material undergoes shape changes to prevent direct rupture of the separator and electrode short-circuiting. However, polyolefins, a raw material for separators, undergo molecular alignment and crystallization during the stretching process, increasing its brittleness and reducing its elongation properties. In other words, once the separator achieves extremely high rigidity and strength, its elongation and flexibility deteriorate, raising the risk of fracture within the battery cell. In summary, it is challenging to balance the elongation and strength for a separator. Therefore, how to effectively improve both the elongation and strength is a bottleneck in the field of separator manufacturing.

### SUMMARY

In view of the shortcomings of the prior art, a first objective of the present disclosure is to provide a high-strength and high-elongation separator. In the high-strength and high-elongation separator, a solubilizer is adopted to improve the fluidity and compatibility of an ultrahigh-molecular-weight polyolefin.

A second objective of the present disclosure is to provide a preparation method of the high-strength and high-elongation separator.

The objectives of the present disclosure are achieved through the following technical solutions:
A high-strength and high-elongation separator is provided, including an ultrahigh-molecular-weight polyolefin and a solubilizer, where in parts by mass, a ratio of the ultrahigh-molecular-weight polyolefin to the solubilizer is (20-40): (2-10); the solubilizer is one or a mixture of two or more selected from the group consisting of an ethylene-propylene copolymer, an ethylene-butene copolymer, and an ethylene-octene copolymer; the ultrahigh-molecular-weight polyolefin includes ultrahigh-molecular-weight polyethylene and ultrahigh-molecular-weight polypropylene; and a weight-average molecular weight of the ultrahigh-molecular-weight polyethylene is 600,000 to 4,000,000, and a weight-average molecular weight of the ultrahigh-molecular-weight polypropylene is 400,000 to 2,600,000.

The ethylene-propylene copolymer is produced through the copolymerization of ethylene and propylene.

The ethylene-butene copolymer is produced through the copolymerization of ethylene and butene.

The ethylene-octene copolymer is produced through the copolymerization of ethylene and octene.

In the above technical solution, in parts by mass, a ratio of the ultrahigh-molecular-weight polyethylene to the ultrahigh-molecular-weight polypropylene is (60-94): (6-40).

In the above technical solution, a melt flow index of the ultrahigh-molecular-weight polyethylene at 21.6 kg and 190 °C is 0 g/10 min to 0.8 g/10 min, and a melt flow index of the ultrahigh-molecular-weight polypropylene at 21.6 kg and 190 °C is 0.1 g/10 min to 10 g/10 min.

In the above technical solution, a plurality of pores are formed in the high-strength and high-elongation separator; the plurality of pores are formed by first filling a pore-forming agent and then extracting the pore-forming agent from the high-strength and high-elongation separator; and in parts by mass, a ratio of the solubilizer to the pore-forming agent is (2-10): (50-78).

In the above technical solution, the pore-forming agent includes white oil and/or dioctyl terephthalate (DOTP).

In the above technical solution, the solubilizer has a density of 0.5 g/cm³ to 1 g/cm³, a melting point of 50 °C to 90 °C, and a crystallization peak temperature of 40 °C to 80 °C.

A preparation method of a high-strength and high-elongation separator is provided, including the following steps:
Step 1: Mixing an ultrahigh-molecular-weight polyolefin, a solubilizer, and a pore-forming agent, and thoroughly stirring to produce a premixed raw material.

In the step (1), the stirring is conducted for 20 min to 40 min at a temperature of 60 °C to 110 °C and a rotational speed of 40 rpm to 60 rpm.

In the step 1, the premixed raw material further includes an antioxidant and a nucleating agent.

In the above technical solution, the premixed raw material further includes a nucleating agent. In parts by mass, a ratio of the nucleating agent to the solubilizer is (0.5-1): (2-10).

In the above technical solution, the nucleating agent is a mixture of pimelic acid and calcium stearate, and in parts by mass, a ratio of the pimelic acid to the calcium stearate is (0.8-3.8): (1.2-4.2).

In the above technical solution, the premixed raw material further includes an antioxidant. In parts by mass, a ratio of the antioxidant to the solubilizer is (0.05-0.1): (2-10).

In the above technical solution, the antioxidant is pentaerythritol tetrakis[β-(3,5-di-*tert*-butyl-4-hydroxyphenyl)propanoate] (antioxidant 1010).

Step 2: Injecting the premixed raw material into an extruder; heating for melting to produce a thermodynamically single-phase melt; and subjecting the thermodynamically single-phase melt to melt casting on a cooling roller to produce a crystalline cast sheet.

In the step 2, a ratio of a linear speed of the cooling roller to a flow speed of the melt casting is higher than 0.8; and the linear speed is expressed in a unit of m/min and the flow speed is expressed in a unit of m/min.

In the step 2, the heating is conducted at 220 °C to 260 °C.

In the step 2, the cooling roller is at a temperature of 70 °C to 90 °C.

In the step 2, the extruder is a co-rotating twin-screw extruder, and a screw of the co-rotating twin-screw extruder has a rotational speed of 100 rpm to 240 rpm and a length-to-diameter ratio of 56 to 68.

In the step 2, during the melt casting, the thermodynamically single-phase melt is at a temperature of 225 °C to 265 °C.

In the step 2, the crystalline cast sheet has a thickness of 0.8 mm to 2.0 mm.

Step 3: Subjecting the crystalline cast sheet to first stretching and cooling to produce a first stretched film; subjecting the first stretched film to second stretching to produce a second stretched film; and conducting extraction and oven-drying to produce the high-strength and high-elongation separator.

In the step 3, the first stretching includes: longitudinal stretching at 140 °C to 150 °C and a stretching speed of 10%/s to 150%/s, heat setting at 140 °C to 150 °C for 60 s to 120 s, and transverse stretching at 140 °C to 150 °C and a stretching speed of 10%/s to 150%/s; and during the first stretching, the transverse stretching is conducted before or after the longitudinal stretching, and the heat setting is conducted between the longitudinal stretching and the transverse stretching.

In the above technical solution, stretch ratios of the longitudinal stretching and the transverse stretching during the first stretching each are 2 to 5.

In the above technical solution, preheating is conducted before the first stretching, and the preheating is conducted at 140 °C to 150 °C for 180 s to 300 s.

In the step 3, the second stretching includes synchronous transverse and longitudinal stretching or stepwise transverse and longitudinal stretching; the synchronous transverse and longitudinal stretching includes: simultaneous transverse and longitudinal stretching at 90 °C to 110 °C and a stretching speed of 10%/s to 150%/s; the stepwise transverse and longitudinal stretching includes: longitudinal stretching at 90 °C to 110 °C and a stretching speed of 10%/s to 150%/s, heat setting at 90 °C to 110 °C for 60 s to 120 s, and transverse stretching at 90 °C to 110 °C and a stretching speed of 10%/s to 150%/s; and during the second stretching, the transverse stretching is conducted before or after the longitudinal stretching, and the heat setting is conducted between the longitudinal stretching and the transverse stretching.

In the above technical solution, preheating is conducted before the second stretching, and the preheating is conducted at 90 °C to 110 °C for 180 s to 300 s.

In the above technical solution, stretch ratios of the longitudinal stretching and the transverse stretching during the second stretching each are 2 to 5.

In the step 3, the oven-drying is conducted at 40 °C to 60 °C for 4 min to 6 min.

In the step 3, the extraction is conducted for 60 s to 240 s in an extraction agent at 25 °C to 55 °C. The extraction agent is dichloromethane with a purity of higher than 99 wt%.

Compared with the prior art, the present disclosure has the following beneficial effects:
The preparation method of the present invention utilizes the solubilizing effect of copolymers in raw materials to enable ultra-high molecular weight polyethylene and ultra-high molecular weight polypropylene to melt into a uniform single phase at high temperatures, ensuring compatibility between them and providing higher strength. Moreover, due to the different crystal structures and densities of different polyolefins, crystalline regions with different textures are formed. A folded-chain crystal structure is formed by the ultrahigh-molecular-weight polypropylene (the ultrahigh-molecular-weight polypropylene has lower crystallinity and better flexibility and better elongation, while an extended-chain crystal structure is formed by the ultrahigh-molecular-weight polyethylene, which has stronger rigidity and slightly weaker elongation than the ultrahigh-molecular-weight polypropylene), thereby enhancing the separator's elongation. During the stretching, the first stretching causes the regular arrangement and local uniform crystallization of polyolefin molecules (crystallinity: 50% to 70%), thereby providing an ultra-high strength. The second stretching causes a specified degree of crystallization in amorphous regions to form semi-crystalline regions. These semi-crystalline regions have better elongation than crystalline zones and can provide improved elongation. The high-strength and high-elongation separator has a tensile strength improved by about 89% and elongation improved by about 76% compared with the conventional lithium-ion battery separators.

### DETAILED DESCRIPTION OF THE EMBODIMENTS

The technical solutions of the present disclosure will be further described below in conjunction with specific embodiments.

The relevant instruments adopted in the specific embodiments of the present disclosure are as follows:
Co-rotating twin-screw extruder: Model: MT-52, a screw with a diameter of 52 mm and a length-to-diameter ratio of 68, from Jiangsu Meizlon Machinery Co., Ltd.
Melt pipeline and T-shaped die: the T-shaped die has a width of 250 mm, from Zhejiang JINGCHENG Mold Machinery Co., Ltd.
Cooling roller: from Anhui Dongsheng Machinery Co., Ltd.
Static biaxial stretching machine: Model: JTL-10, from Weihai Haichao Machinery Co., Ltd.
Oven: Model: 101-4B, from Shanghai Shangdao Instrument Manufacturing Co., Ltd.

The relevant raw materials adopted in the specific embodiments of the present disclosure are as follows:
Ultrahigh-molecular-weight polyethylene and ultrahigh-molecular-weight polypropylene: KPIC (Shanghai). The ultrahigh-molecular-weight polyethylene has a weight-average molecular weight of 1,500,000 and a melt flow index of 0 g/10 min (at 21.6 kg and 190 °C). The ultrahigh-molecular-weight polypropylene has a weight-average molecular weight of 1,300,000 and a melt flow index of 0.20 g/10 min (at 21.6 kg and 190 °C).

White oil: 50#, from Zhejiang CHXIN Oil Technology Co., Ltd.

Dichloromethane: from Shandong Luhua Chemical Co., Ltd.

Ethylene-propylene copolymer, Ethylene-butene copolymer, and Ethylene-octene copolymer: Grades: Engage8411, Engage8230, and Engage8150, respectively, from Jiangsu Feiou Plastics Co., Ltd. The ethylene-propylene copolymer has a density of 0.868 g/cm³, a melting point of 55.0 °C, and a crystallization peak temperature of 42.0 °C. The ethylene-butene copolymer has a density of 0.842 g/cm³, a melting point of 57.2 °C, and a crystallization peak temperature of 45.1 °C. The ethylene-octene copolymer has a density of 0.852 g/cm³, a melting point of 60.2 °C, and a crystallization peak temperature of 50.4 °C.

DOTP: Dioctyl terephthalate, from Yufeng Nano Co., Ltd.

Tensile strength and elongation testing methods are conducted in accordance with the National Standard Polyolefin Separator for Lithium-Ion Battery (GB/T 36363-2018). 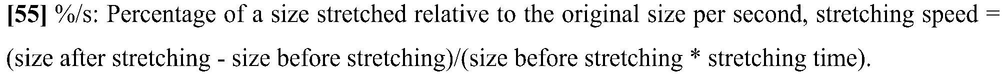 %/s: Percentage of a size stretched relative to the original size per second, stretching speed = (size after stretching - size before stretching)/(size before stretching * stretching time).

Resistance of nail penetration per micron = resistance of nail penetration/separator thickness.

Testing temperature for ionic conductivity: room temperature.

### Example 1

A high-strength and high-elongation separator was provided, including an ultrahigh-molecular-weight polyolefin and a solubilizer. A plurality of pores were formed in the high-strength and high-elongation separator. The plurality of pores were formed by first filling a pore-forming agent and then extracting the pore-forming agent from the high-strength and high-elongation separator.

A preparation method of a high-strength and high-elongation separator was provided, including the following steps:
Step 1: The ultrahigh-molecular-weight polyolefin, the solubilizer, and the pore-forming agent were mixed in a raw material premixing tank, and stirred for 30 min at 85 °C and a rotational speed of 50 rpm to produce a premixed raw material. In parts by mass, the ultrahigh-molecular-weight polyolefin, the solubilizer, and the pore-forming agent were in a ratio of 30:5:65. The solubilizer was an ethylene-butene copolymer. The ultrahigh-molecular-weight polyolefin was a mixture of ultrahigh-molecular-weight polyethylene and ultrahigh-molecular-weight polypropylene, and in parts by mass, a ratio of the ultrahigh-molecular-weight polyethylene to the ultrahigh-molecular-weight polypropylene was 70:30. The pore-forming agent was white oil.
Step 2: The premixed raw material was injected into a co-rotating twin-screw extruder, and heated at 240 °C and a rotational speed of 170 rpm for melting to produce a thermodynamically single-phase melt. The 245 °C thermodynamically single-phase melt was extruded by a T-shaped die through a melt pipeline, subjected to melt casting on a cooling roller at 80 °C (a ratio of a linear speed of the cooling roller to a flow speed of the melt casting was 1, where the linear speed was expressed in a unit of m/min and the flow speed was expressed in a unit of m/min), and then cooled to room temperature of 20 °C to 25 °C to produce a crystalline cast sheet with a thickness of 1.4 mm.
Step 3: The crystalline cast sheet was cut into a first square sample of 100 mm × 100 mm and subjected to first stretching as follows: The first square sample was placed on a static biaxial stretching machine, flattened and clamped by clamps, then preheated in a heating oven at 145 °C for 240 s; first stretched longitudinally at 145 °C and a stretching speed of 80%/s to 5 times (stretch ratio: 5), subjected to heat setting at 145 °C for 90 s, then stretched transversally at 145 °C and a stretching speed of 80%/s to 5 times (stretch ratio: 5), and cooled to room temperature to produce a first stretched film. The first stretched film was cut into a second square sample of 100 mm × 100 mm and subjected to second stretching (stepwise transverse and longitudinal stretching) as follows: The second square sample was placed on a static biaxial stretching machine, flattened and clamped by clamps, then preheated in a heating oven at 100 °C for 240 s; first stretched longitudinally at 100 °C and a stretching speed of 80%/s to 5 times (stretch ratio: 5), subjected to heat setting at 100 °C for 90 s, then stretched transversally at 100 °C and a stretching speed of 80%/s to 5 times (stretch ratio: 5), and cooled to room temperature to produce a second stretched film. The second stretched film was then flattened and clamped with an extraction device, subjected to extraction in 25 °C dichloromethane (purity: higher than 99 wt%) for 180 s, and oven-dried in an oven at 40 °C for 5 min to produce the high-strength and high-elongation separator.

### Example 2

A preparation method of a high-strength and high-elongation separator was provided. This preparation method was basically the same as Example 1, with the only difference being: in this example, stretch ratios of the longitudinal stretching and the transverse stretching during the second stretching each were 3. That is, the second stretching in this example was as follows: The second square sample was placed on a static biaxial stretching machine, flattened and clamped by clamps, then preheated in a heating oven at 100 °C for 240 s, first stretched longitudinally at 100 °C and a stretching speed of 80%/s to 3 times, subjected to heat setting at 100 °C for 90 s, then stretched transversally at 100 °C and a stretching speed of 80%/s to 3 times, and cooled to room temperature to produce a second stretched film.

### Example 3

A preparation method of a high-strength and high-elongation separator was provided. This preparation method was basically the same as Example 1, with the only difference being: in this example, the second stretching was synchronous transverse and longitudinal stretching. That is, the second stretching in this example was as follows: The second square sample was placed on a static biaxial stretching machine, flattened and clamped by clamps, then preheated in a heating oven at 100 °C for 240 s, stretched both longitudinally and transversally at 100 °C and a stretching speed of 80%/s to 5 times (stretch ratio: 5), and cooled to room temperature to produce a second stretched film.

### Example 4

A preparation method of a high-strength and high-elongation separator was provided. This preparation method was basically the same as Example 3, with the only difference being: in this example, stretch ratios of the longitudinal stretching and the transverse stretching during the second stretching each were 3.

### Comparative Example 1

A preparation method of a lithium-ion battery separator was provided, including the following steps:
Step 1: Ultrahigh-molecular-weight polyethylene and a pore-forming agent were added to a raw material premixing tank, and stirred for 30 min at 90 °C and a rotational speed of 50 rpm to produce a premixed raw material. In parts by mass, a ratio of the ultrahigh-molecular-weight polyethylene to the pore-forming agent was 30:65. The pore-forming agent was white oil.
Step 2: The premixed raw material was injected into a co-rotating twin-screw extruder, and heated at 240 °C and a rotational speed of 170 rpm for melting to produce a thermodynamically single-phase melt. The 245 °C thermodynamically single-phase melt was extruded by a T-shaped die through a melt pipeline, subjected to melt casting on a cooling roller at 80 °C (a ratio of a linear speed of the cooling roller to a flow speed of the melt casting was 1, where the linear speed was expressed in a unit of m/min and the flow speed was expressed in a unit of m/min), and then cooled to room temperature of 20 °C to 25 °C to produce a crystalline cast sheet with a thickness of 1.3 mm.
Step 3: The crystalline cast sheet was cut into a square sample of 100 mm × 100 mm. The square sample was placed on a static biaxial stretching machine, flattened and clamped by clamps, then preheated in a heating oven at 145 °C for 240 s, stretched both longitudinally and transversally at 145 °C and a stretching speed of 80%/s to 10 times (stretch ratios of longitudinal stretching and transverse stretching each were 10), and cooled to room temperature to produce a stretched separator The stretched separator was then flattened and clamped with an extraction device, subjected to extraction in 25 °C dichloromethane (a concentration of the dichloromethane was higher than 99 wt%) for 180 s, and oven-dried in an oven at 40 °C for 5 min to produce a lithium-ion battery separator.

### Comparative Example 2

A preparation method of a lithium-ion battery separator was provided. This preparation method was basically the same as Comparative Example 1, with the only difference being "simultaneous transverse and longitudinal stretching at 145°C and a stretching speed of 80%/s each to 10 times (stretch ratios of the longitudinal stretching and transverse stretching each were 10)" in Comparative Example 1 was replaced with "simultaneous transverse and longitudinal stretching at 145 °C and a stretching speed of 80%/s each to 8 times".

### Comparative Example 3

A preparation method of a lithium-ion battery separator was provided. This preparation method was basically the same as Example 1, with the only difference being, in this comparative example, the ultrahigh-molecular-weight polyolefin, the solubilizer, and the pore-forming agent were in a ratio of 30:5:65 in parts by mass, the ultrahigh-molecular-weight polyolefin was a mixture of ultrahigh-molecular-weight polyethylene and ultrahigh-molecular-weight polypropylene, a ratio of the ultrahigh-molecular-weight polyethylene to the ultrahigh-molecular-weight polypropylene was 28.5:1.5 in parts by mass, and the crystalline cast sheet had a thickness of 1.6 mm.

### Comparative Example 4

A preparation method of a lithium-ion battery separator was provided. This preparation method was basically the same as Example 1, with the only difference being, in this comparative example, the ultrahigh-molecular-weight polyolefin, the solubilizer, and the pore-forming agent were in a ratio of 30:5:65 in parts by mass, the ultrahigh-molecular-weight polyolefin was a mixture of ultrahigh-molecular-weight polyethylene and ultrahigh-molecular-weight polypropylene, and a ratio of the ultrahigh-molecular-weight polyethylene to the ultrahigh-molecular-weight polypropylene was 16.5:13.5 in parts by mass.

This comparative example exhibited melt fracture during melt casting, making it impossible to form a crystalline cast sheet.

### Comparative Example 5

A preparation method of a lithium-ion battery separator was provided. This preparation method was basically the same as Example 1, with the only difference being: In this comparative example, the solubilizer was not added, that is, the ultrahigh-molecular-weight polyolefin and the pore-forming agent were mixed in the raw material premixing tank. In parts by mass, a ratio of the ultrahigh-molecular-weight polyolefin to the pore-forming agent was 30:70. The ultrahigh-molecular-weight polyolefin was a mixture of ultrahigh-molecular-weight polyethylene and ultrahigh-molecular-weight polypropylene. In parts by mass, a ratio of the ultrahigh-molecular-weight polyethylene to the ultrahigh-molecular-weight polypropylene was 70:30. The pore-forming agent was white oil.

This comparative example exhibited melt fracture during melt casting, making it impossible to form a crystalline cast sheet.

### Comparative Example 6

A preparation method of a lithium-ion battery separator was provided. This preparation method was basically the same as Example 1, with the only difference being: In this comparative example, ultrahigh-molecular-weight polyethylene, ultrahigh-molecular-weight polypropylene, an antioxidant, a solubilizer, a pore-forming agent, and a nucleating agent were mixed. In parts by mass, the ultrahigh-molecular-weight polyethylene, the ultrahigh-molecular-weight polypropylene, the antioxidant, the solubilizer, the pore-forming agent, and the nucleating agent were in a ratio of 21:9:0.05:5:65:0.5. The nucleating agent was a mixture of pimelic acid and calcium stearate, where in parts by mass, a ratio of the pimelic acid to the calcium stearate was 1.2:3.8. The antioxidant was pentaerythritol tetrakis[β-(3,5-di-*tert*-butyl-4-hydroxyphenyl)propanoate] (antioxidant 1010). The pore-forming agent and the solubilizer were the same as those in Example 1. The crystalline cast sheet had a thickness of 1.4 mm.

### Comparative Example 7

A preparation method of a lithium-ion battery separator was provided. This preparation method was basically the same as Example 1, with the only difference being: a ratio of a linear speed of the cooling roller to a flow speed of the melt casting was 30, stretching was conducted through casting, and cooling was conducted to room temperature to produce a crystalline cast sheet with a thickness of 1.3 mm.

### Comparative Example 8

A preparation method of a lithium-ion battery separator was provided. This preparation method was basically the same as Example 1, with the only difference being: in this comparative example, the step 3 was as follows: The crystalline cast sheet was cut into a square sample of 100 mm × 100 mm. The square sample was placed on a static biaxial stretching machine, flattened and clamped by clamps, then preheated in a heating oven at 145 °C for 240 s; first stretched longitudinally at 145 °C and a stretching speed of 80%/s to 10 times (stretch ratio: 10), subjected to heat setting at 145 °C for 90 s, then stretched transversally at 145 °C and a stretching speed of 80%/s to 10 times (stretch ratio: 10), and cooled to room temperature to produce a lithium-ion battery separator. That is, in this comparative example, 10-fold stretching was conducted merely once.

### Comparative Example 9

A preparation method of a lithium-ion battery separator was provided. This preparation method was basically the same as Example 1, with the only difference being, in this comparative example, the ultrahigh-molecular-weight polyolefin was ultrahigh-molecular-weight polyethylene. That is, in this comparative example, the ultrahigh-molecular-weight polypropylene was not added.

Table 1 shows the performance parameters of the high-strength and high-elongation separators prepared in Examples 1 to 4 and the lithium-ion battery separators prepared in Comparative Examples 1 to 9 (in Table 1, the separator thickness refers to a high-strength and high-elongation separator/lithium-ion battery separator thickness).

**Table 1**

| Examples and comparative examples | Example 1 | Example 2 | Example 3 | Example 4 | Com parat ive Exa mple 1 | Comp arativ e Exam ple 2 | Com parat ive Exa mple 3 | Com parat ive Exa mple 4 | Com parat ive Exa mple 5 | Comparat ive Example 6 | Com parat ive Exa mple 7 | Com parat ive Exa mple 8 | Com parat ive Exa mple 9 |
|---|---|---|---|---|---|---|---|---|---|---|---|---|---|
| Separator thickness (µm) | 9.21 | 14.1 | 9.55 | 13.93 | 8.76 | 13.88 | 10.3 | | | 8.71 | 7.21 | 9.02 | 8.11 |
| Porosit y (%) | 45.5 | 45.3 | 44.9 | 46.1 | 45.2 | 45.7 | 45.6 | | | 46.3 | 45.2 | 45.6 | 46.7 |
| MD tensile strengt h (MPa) | 6011 | 5502 | 5997 | 5481 | 3209 | 2886 | 3214 | exhi bited melt fract ure duri ng melt casti ng, maki ng it impo ssibl e to form a cryst allin e cast sheet | exhi bited melt fract ure duri ng melt casti ng, maki ng it impo ssibl e to form a cryst allin e cast sheet | 5982 | 5872 | 3198 | 3572 |
| TD tensile strength (MPa) | 5987 | 5439 | 6022 | 5452 | 3197 | 2873 | 3289 | | | 6011 | 5712 | 3172 | 3641 |
| MD elonga tion (%) | 156 | 187 | 162 | 187 | 95 | 102 | 90 | | | 143 | 151 | 90 | 72 |
| TD elonga tion (%) | 160 | 192 | 159 | 192 | 92 | 107 | 85 | | | 157 | 149 | 97 | 65 |
| Resista nce of nail penetr ation per micron (N/µm ) | 1.12 | 1.06 | 1.13 | 1.02 | 0.62 | 0.57 | 0.61 | | | 1.11 | 1 | 0.6 | 0.77 |
| Ionic conduc tivity (mS/c m) | 0.91 | 0.89 | 0.92 | 0.9 | 0.88 | 0.91 | 0.9 | | | 0.97 | 0.93 | 0.91 | 0.92 |

It can be seen from Examples 1 and 2 that, with the increase in stretch ratios of the second stretching, the tensile strengths and resistance of nail penetration per micron gradually increase, while the elongation decreases to some extent. This is mainly attributed to the fact that, as the stretch ratios of the second stretching increase, the oriented crystallization in amorphous regions gradually increases, enhancing the rigidity strength of a separator while reducing its toughness and elongation. It can be seen from Comparative Examples 1 and 2 that, when a single polyolefin undergoes single stretching, the tensile strength and elongation both are low due to a single crystal form. It can be seen from Comparative Examples 3 to 5 that, when a content of polypropylene in the ultrahigh-molecular-weight polyolefin is ≤ 5% (Comparative Example 3), the tensile strengths, puncture strength, and elongation of the lithium-ion battery separator are not significantly improved. When a content of polypropylene in the ultrahigh-molecular-weight polyolefin is ≥45% (Comparative Example 4) or the solubilizer is not added (Comparative Example 5), due to the compatibility coefficients of polyethylene, polypropylene and white oil, two phases cannot be merged, it is impossible to produce a homogeneous melt, and a cast sheet cannot be produced due to melt rupturing. It can be seen from Comparative Examples 6 and 7 that the addition of the nucleating agent and antioxidant or performing high-ratio stretching during casting has no significant influence on the tensile strengths, resistance of puncture, ionic conductivity, and elongation of a separator. It can be seen from Comparative Examples 8 and 9 that key factors enabling the separator to achieve both a high strength and high elongation are the multiple times of stretching and the interaction among polyolefin raw materials. When stretching is conducted merely once, a resulting separator has both a poor tensile strength and poor elongation. When only ultrahigh-molecular-weight polyethylene is adopted, but stretching is conducted multiple times, the tensile strength increases slightly, but the elongation is significantly reduced. This is because the multiple times of stretching enhances the crystallinity of a separator to increase the rigidity, while the absence of the ultrahigh-molecular-weight polypropylene component prevents the formation of flexible crystalline regions, resulting in poor elongation. Therefore, only the technical solution in the example of the present disclosure can achieve the significant balance and enhancement of properties.

The present disclosure is exemplarily described above. It should be noted that, without departing from the core of the present disclosure, any simple variation, modification, or equivalent substitutions made by those skilled in the art without creative efforts shall fall within the protection scope of the present disclosure.

## Claims

1. A high-strength and high-elongation separator, comprising an ultrahigh-molecular-weight polyolefin and a solubilizer, wherein in parts by mass, a ratio of the ultrahigh-molecular-weight polyolefin to the solubilizer is (20-40):(2-10); wherein the solubilizer is one or a mixture of two or more selected from the group consisting of an ethylene-propylene copolymer, an ethylene-butene copolymer, and an ethylene-octene copolymer; the ultrahigh-molecular-weight polyolefin comprises ultrahigh-molecular-weight polyethylene and ultrahigh-molecular-weight polypropylene; and a weight-average molecular weight of the ultrahigh-molecular-weight polyethylene is 600,000 to 4,000,000, and a weight-average molecular weight of the ultrahigh-molecular-weight polypropylene is 400,000 to 2,600,000.

2. The high-strength and high-elongation separator according to claim 1, wherein a plurality of pores are formed in the high-strength and high-elongation separator; the plurality of pores are formed by first filling a pore-forming agent and then extracting the pore-forming agent from the high-strength and high-elongation separator; and in parts by mass, a ratio of the solubilizer to the pore-forming agent is (2-10):(50-78).

3. The high-strength and high-elongation separator according to claim 1 or 2, wherein the solubilizer has a density of 0.5 g/cm³ to 1 g/cm³, a melting point of 50 °C to 90 °C, and a crystallization peak temperature of 55 °C to 80 °C.

4. The high-strength and high-elongation separator according to claim 1 or 2, wherein in parts by mass, a ratio of the ultrahigh-molecular-weight polyethylene to the ultrahigh-molecular-weight polypropylene is (60-94): (6-40).

5. The high-strength and high-elongation separator according to claim 2, wherein the pore-forming agent comprises white oil and/or dioctyl terephthalate (DOTP).

6. A preparation method of a high-strength and high-elongation separator, comprising the following steps:
step 1, mixing an ultrahigh-molecular-weight polyolefin, a solubilizer, and a pore-forming agent, and thoroughly stirring to produce a premixed raw material;
step 2, injecting the premixed raw material into an extruder; heating for melting to produce a thermodynamically single-phase melt; and subjecting the thermodynamically single-phase melt to melt casting on a cooling roller to produce a crystalline cast sheet; and
step 3, subjecting the crystalline cast sheet to first stretching and cooling to produce a first stretched film; subjecting the first stretched film to second stretching to produce a second stretched film; and conducting extraction and oven-drying to produce the high-strength and high-elongation separator.

7. The preparation method according to claim 6, wherein in the step 3, the first stretching comprises: longitudinal stretching at 140 °C to 150 °C, heat setting at 140 °C to 150 °C for 60 s to 120 s, and transverse stretching at 140 °C to 150 °C; and during the first stretching, the transverse stretching is conducted before or after the longitudinal stretching, and the heat setting is conducted between the longitudinal stretching and the transverse stretching.

8. The preparation method according to claim 6 or 7, wherein the second stretching comprises synchronous transverse and longitudinal stretching or stepwise transverse and longitudinal stretching; the synchronous transverse and longitudinal stretching comprises: simultaneous transverse and longitudinal stretching at 90 °C to 110 °C; the stepwise transverse and longitudinal stretching comprises: longitudinal stretching at 90 °C to 110 °C, heat setting at 90°C to 110°C for 60 s to 120 s, and transverse stretching at 90 °C to 110 °C; and during the second stretching, the transverse stretching is conducted before or after the longitudinal stretching, and the heat setting is conducted between the longitudinal stretching and the transverse stretching.

9. The preparation method according to claim 7, wherein stretch ratios of the longitudinal stretching and the transverse stretching during the first stretching each are 2 to 5; and stretch ratios of the longitudinal stretching and the transverse stretching during the second stretching each are 2 to 5.

10. The preparation method according to claim 7, wherein in the step 2, a ratio of a linear speed of the cooling roller to a flow speed of the melt casting is 0.8 to 1.5; the linear speed is expressed in a unit of m/min and the flow speed is expressed in a unit of m/min; and in the step 2, during the melt casting, the thermodynamically single-phase melt is at a temperature of 225°C to 265°C.
